(19) Europäisches Patentamt / European Patent Office / Office européen des brevets

(11) EP 4 738 041 A1

(12) EUROPEAN PATENT APPLICATION

(43) Date of publication:
06.05.2026 Bulletin 2026/19

(21) Application number: 25218171.4

(22) Date of filing: 25.11.2025

(51) International Patent Classification (IPC):
G05D 1/244 (2024.01)    F42B 12/40 (2006.01)
F41G 7/00 (2006.01)    F41G 7/22 (2006.01)

(52) Cooperative Patent Classification (CPC):
F42B 12/40; F41G 7/007; F41G 7/2253;
F41G 7/226; F41G 7/2293; G05D 1/244;
B64U 2201/10; G05D 2105/35; G05D 2109/20

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 05.11.2024  GB 202416317
21.02.2025  AU 2025900505

(71) Applicant: Cumpson, Peter
Gateshead Tyne and Wear NE9 6EQ (GB)

(72) Inventor: Cumpson, Peter
Gateshead Tyne and Wear NE9 6EQ (GB)

(54) **TARGETING APPARATUS AND METHOD FOR USING INFORMATION-THEORY ENABLED TARGET INDICATORS IN GPS-DENIED ENVIRONMENTS**

(57) The invention provides precise targeting in GPS-denied environments using a plurality of Computer-Readable Image Markers (CRIMs) deployed around a target and imaged from altitude. Each CRIM carries a unique code and may include a moisture-absorbing anchor to stabilise its pose. Wide-area imagery is processed to select a stable subset of CRIMs whose relative geometry is unchanged; projective geometry then yields target coordinates for autonomous navigation. An attack drone uses onboard detection of CRIMs to update a homography in real time, ignoring displaced or defaced markers. Optional near-IR and UV-fluorescent embodiments improve night or low-contrast performance; a low-rate link (10-100 bps) can provide infrequent coordinate refreshes without continuous video. The approach reduces compute and bandwidth demand, is robust to marker loss or spoofing, and enables sub-metre terminal guidance with low unit cost.

FIGURE 5

EP 4 738 041 A1

Processed by Luminess, 75001 PARIS (FR)

## Description

### Field of the Invention

The present invention relates to systems and methods for autonomous navigation and targeting of munitions using Target Indicators (TIs) comprising Computer-Readable Image Markers (CRIMs) that may be of particular advantage in environments where GPS signals are denied. More specifically, it addresses targeting challenges faced by small drones, enhancing their operational reliability in contested environments. There are civilian applications in the drone-delivery of humanitarian aid in disaster mitigation.

### Related Applications

This application claims priority from UK patent application no. GB2416317.2 filed 5th November 2024 and Australian patent application no. AU2025900505, filed 21 February 2025.

### Background

In modern warfare, small unmanned aerial vehicles (UAVs), often referred to as Micro Air Vehicles (MAVs) or Mini Uncrewed Air Systems (MUAS), face significant challenges when navigating and targeting in GPS-denied environments due to electronic warfare and jamming. Traditional navigation methods, including visual navigation using natural landmarks, can be error-prone and resource-intensive, to quote a recent review: "one of the greatest hurdles to visual localization is that the computational requirements can easily exceed the resources available on a simple robot. To get around this problem, there are four different approaches: offload the computation to an external computer, utilize new technology, reduce the computational burden in software, and increase the processing power available to the robot" [1]. Given the challenges of offloading computation when the electromagnetic (EM) spectrum is contested, and increasing the processing power available when there are weight and power restriction, we propose a new technology that reduces the computational burden in software.

There is a recognized problem in targeting specific battlefield targets with airborne drones (see for example newspaper articles [2]). The last mile, or few miles, to the battlefront is an important area. Electronic counter-measures can prevent effective communication with drones, or limit it to low data-rates, and certainly confuse GPS and similar navigational systems, so that any operator can find it difficult to direct a drone visually on the right target using (unreliable or absent) video transmissions from the drone. Often that means the drone operator must be within visual range of the target so as not to have to use a video link that could be compromised. This in turn puts the operator in more danger than they need be. Ideally the operator should be located in relative safety far behind the front line. There is some discussion of this problem in the literature, but it is often (perhaps euphemistically) couched in terms of "docking" rather than targeting[3].

One approach to solve this problem is to use "artificial intelligence" or "machine learning" techniques to give the computer within the drone the capability to navigate using reference points from the natural environment (roads, rivers, trees, hedgerows etc). This is expensive - requiring much more powerful hardware and software than would otherwise be required to steer the drone alone. Trees can look similar. Buildings can look almost identical. In war even more visual interpretation errors can occur, as features in the landscape can change rapidly on the battlefield, and survey photos of the area can rapidly become out of date. Even things such as trees losing their leaves or long afternoon shadows can cause errors that take massive training sets to reduce.

Another approach is to employ inertial sensors and perhaps gyroscopes, often fabricated using Micro Electro-Mechanical Systems (MEMS) techniques. Sometimes this is combined with optical measurements using "data fusion" methods[4]. However, the MEMS accelerometers and gyros that can be put onto a drone cheaply are not very accurate when their outputs are integrated over time to give position. The result is that the location accuracy of these methods is inadequate. A small drone with a small explosive payload needs to be directed with great precision, simply resulting from its small size. A grenade-sized explosive needs to be detonated within about a metre of the target. This is currently impossible over distances of 1km or more using cheap inertial sensors, though data fusion with visual odometry may help. A larger payload, or a higher accuracy inertial sensor, would both be much more expensive to deploy. The emphasis above on inexpensive methods is timely. It is a result of developments on battlefields since about 2020.

Imagine, for a moment, that you are a soldier in a dugout somewhere in eastern Ukraine today. Stockpiles of expensive missiles are exhausted. In front of you are three small drones, each costing about US$1,000. Your task is eliminating an artillery piece (or a radar system, or a battalion HQ) tomorrow. You know that electronic warfare from your opponent means that, on average, only one of those three drones may get through. You are tempted to move closer to the target to overcome the jamming by having the target in visual range, even though that puts you in greater danger. The question is, what technology can we offer this soldier to make sure that the first drone reaches its target despite GPS-denial and jamming? It had better cost less than US$2,000, because otherwise it is more cost-effective to send in three drones and accept the losses. In the last 60 years, many brilliant pieces of technology have been developed to help autonomous navigation, from optical ring-laser gyros to radar terrain-following. The cheapest start at around US$50,000. Instead, we present a system that goes against conventional wisdom somewhat, but using modern digital methods allows GPS-denied accuracy of better than 0.5 metres over 20km or more, and does it for much less than the cost of a single drone. This reliable method of "last-mile" targeting allows small drones or loitering munitions with existing resources to reach targets accurately without GPS, even in the last section of flight. It works with existing drone types and addresses the Target and Engage elements of the "Find, Fix, Track, Target, Engage, Assess" targeting cycle. We do this using Computer Readable Image Markers. The use of Computer-Readable Image Markers (CRIMs), such as QR codes or Apriltags[5], has been explored in various applications, and indeed are sometimes used as landing markers for drones; however, their integration into autonomous targeting systems for MAVs presents unique challenges. The deployment and identification of these markers must be reliable and resilient to environmental factors that may affect their stability and visibility.

**Summary of the Invention**

- A system for GPS-denied targeting using a plurality of computer-readable image markers (CRIMs) deployed around a target area, a high-altitude imaging device to observe the CRIMs, and a processing unit to compute target coordinates from CRIM geometry.

- Each CRIM bears a unique machine-readable code and optionally includes a mass-increasing anchor (e.g., moisture-absorbing medium) to stabilise ground position after deployment.

- A method in which the aircraft distributes CRIMs, an imaging device acquires wide-area images, and the processor identifies CRIMs, rejects those that exhibit relative motion, and computes the target location from a largest consistent subset of stable CRIMs.

- The processor applies projective geometry and an information-theoretic/probabilistic model to score CRIM reliability, selecting a subset whose pairwise relations remain stable despite disturbances or partial destruction.

- A drone configured with an imaging device and onboard processor to perform the above stability assessment and navigation without reliance on GPS.

- Optional near-infrared-selective CRIM embodiments enabling detection with filtered cameras while remaining inconspicuous in visible light.

- Optional ultraviolet-responsive/fluorescent CRIM embodiments to enhance detectability at night or in low-light conditions.

- Optional metameric/spectral-camouflage CRIM layers that appear visually neutral yet exhibit high contrast in selected spectral bands.

- Optional dual-sided coding of CRIMs to permit identification regardless of landing orientation.

- Optional low-bandwidth communication to provide periodic target-coordinate updates or confirmation while maintaining comms silence otherwise.

- Rules for disregarding CRIMs that are defaced, displaced, or inconsistent with the stable subset, thereby hardening against spoofing and environmental drift.

- Implementations compatible with standard coded fiducials and conventional aerial imaging payloads.

- Advantages include robust target localisation with sparse/contested communications, tolerance to marker loss or motion, reduced computational burden via subset selection, and low unit cost of CRIM manufacture.

**Problem-Solution Overview**

Conventional target localisation systems based on vision tags or natural features are fragile in contested, GPS-denied environments: (i) markers may drift or be removed, so geometric consistency assumptions fail; (ii) wide-area imagery is noisy and intermittently available; and (iii) communications links are constrained, preventing continuous external correction. The objective technical problem is therefore to enable reliable, low-burden target localisation and navigation when only a subset of deployed markers remains geometrically trustworthy and communications are sparse.

The invention solves this by deploying a plurality of computer-readable image markers (CRIMs) with unique codes and mass-increasing anchors to stabilise their ground pose, acquiring wide-area imagery, and computing target coordinates from the *largest consistent subset* of markers that exhibit stable relative geometry. A processor applies projective geometry together with an information-theoretic/probabilistic reliability model to score and select markers; markers that are displaced, defaced, or inconsistent are automatically disregarded. Optional spectral embodiments (near-infrared /UV /fluorescent or metameric camouflage) increase detectability to the sensor while remaining visually inconspicuous, and optional dual-sided coding preserves readability irrespective of landing orientation. An optional low-bandwidth update channel provides infrequent coordinate refreshes without continuous dependence on a high-rate link.

This configuration yields concrete technical effects: (a) robust localisation despite partial marker loss or motion (fault-tolerance via subset selection and consistency checks); (b) reduced on-board compute and bandwidth demand compared to dense SLAM-style pipelines (processing focuses on a vetted subset and requires only occasional updates); (c) improved measurement SNR and night performance (spectral selectivity/fluorescence); and (d) reliable decoding after random landing (dual-sided coding).

**Generalised Cross-Validation-based kinematic consistency screening (optional).**

In some embodiments, external fixes (e.g., GNSS or vision-based positions) are prescreened using generalised cross-validation (GCV) with leave-one-out residuals and per-fix leverage computed from the linearised weighted least-squares normal equations of the IMU-anchored state estimate. Without re-solving the full system, the processor flags high-leverage fixes whose LOO residuals contradict IMU-implied displacements and down-weights or removes them before the homography /PnP update (see Algorithm 1). *Technical effect:* this reduces the influence of corrupted/spoofed fixes on the geometry solution, shortens convergence, and increases operational safety by withholding or tempering updates when predictive residuals exceed a statistical gate, all with negligible computational overhead by reusing the QR/Cholesky factors already available onboard.

Collectively, these effects provide an autonomous targeting and navigation system that maintains accuracy and operability under GPS denial, visual clutter, and hostile interference, using standard aerial imaging payloads.

**Example of Usage**

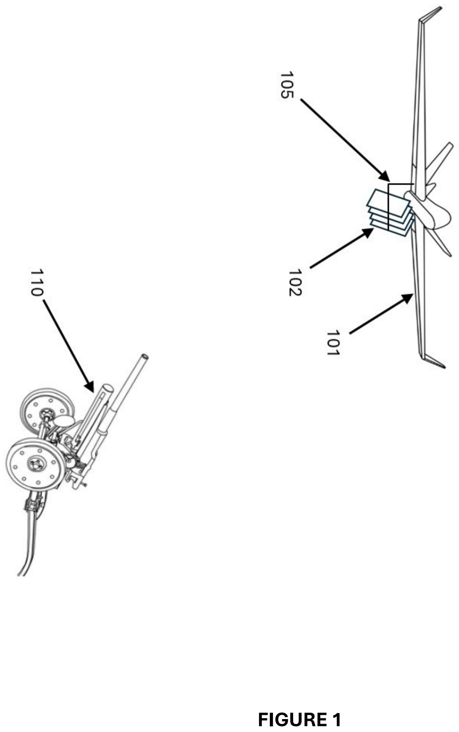

This sequence is shown in Figures 1 to 9. In Figure 1, a drone (or other aircraft such as a manned fixed-wing or helicopter aircraft) (101), approaches the target, possibly from a high altitude carrying a plurality of TIs (102) held in place by a controlled release mechanism (105). The target (110) shown is an artillery piece, but may be any asset of the opponent such as a radar emplacement, battalion headquarters or others.

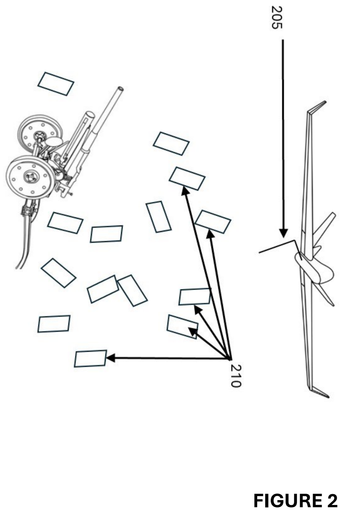

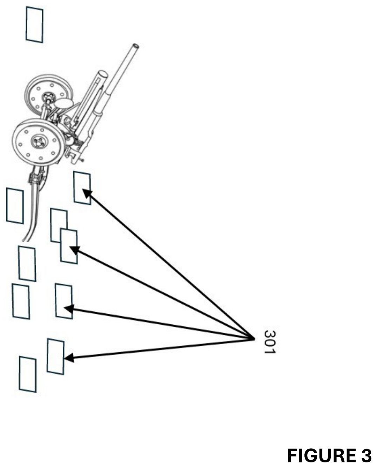

Figure 2 shows the release of TIs (210) from the aircraft after the release mechanism (205) is triggered, either on a remote radio command from an operator or when the aircraft has reached a pre-determined location as determined by its inertial guidance (for example). The TIs fall under gravity and scatter around the target. Figure 3 shows the TIs (301) having fallen and lying on the ground in proximity to the target.

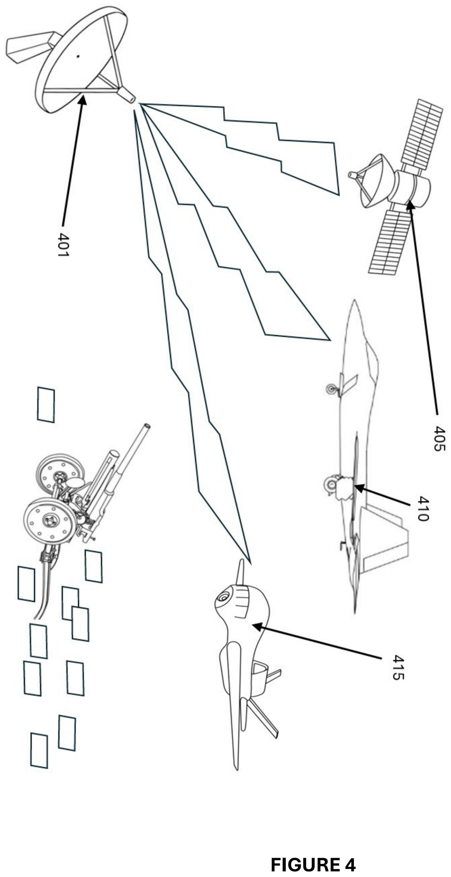

Figure 4 shows three optional devices for capturing the location of the fallen TIs after they reach the ground. A satellite (405), a manned aircraft (410) or a surveillance drone (415). Any combination, or one alone, of these may be used to provide image(s). The aircraft or drone may in fact be the same ones that dropped the TIs in some embodiments of this method. The satellite, aircraft or drone record images of the ground around the target, including the scattered TIs. These images are transmitted or otherwise returned to a command centre to be interpreted and the target position defined with respect to the fallen TIs. In one embodiment this is done by transmission of the images to a radio receiver (401) but it could also be by physically returning the digital images to a base as the aircraft returns, on a memory storage device.

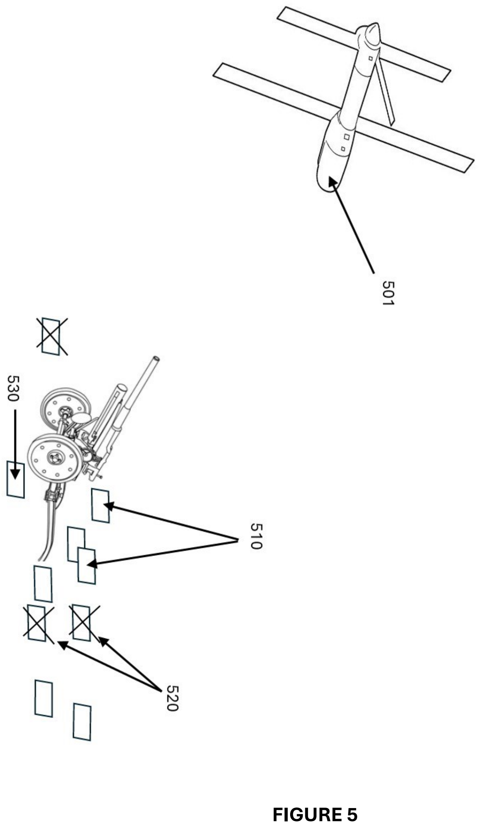

Figure 5 shows an approaching attack drone or loitering munition (501). A camera in the said drone images the battlefield, and a computer in the drone identifies the TIs and their locations in 3D using projective geometry, typically by a matrix method. This is much faster, and more straightforward to implement, than artificial intelligence methods. In the time that has elapsed since the satellite and/or aircraft and/or surveillance drone imaged the same area previously, the coordinates of the target with respect to the TIs have been loaded into the attack drone. A human has decided where the target is in the image, and that position has been converted into the coodinates of that target (with respect to the CRIMs).

An opponent can of course destroy TIs, or move them, or try to fool the system by adding new ones. These countermeasures are mitigated unless a large majority of TIs are disturbed. The attack drone is programmed only to use the positions of TIs that are on a stored list (each TI is individually identifiable with a serial number) so none can be added. It is programmed to use only the largest set of visible TIs whose relative positions have not changed. In Figure 5 we show defaced or destroyed TIs (e.g 520) and TIs that have been moved (e.g. 530), but some have not been moved or destroyed (e.g. 510) and it is these alone that the drone uses to define the position of the target using the stored coordinates of the target relative to those unmoved TIs. The assumption is that those TIs whose *relative position* has not changed can be assumed to be in the same *absolute position,* and therefore target coordinates with respect to the unmoved TIs can be assumed to be still valid. To frustrate this process the opponent must destroy or displace almost all of the TIs (for example, a large majority of the deployed TIs) or the attack drone would not be fooled as to its location - it would detect that all relative positions had changed and may be programmed to return to base.

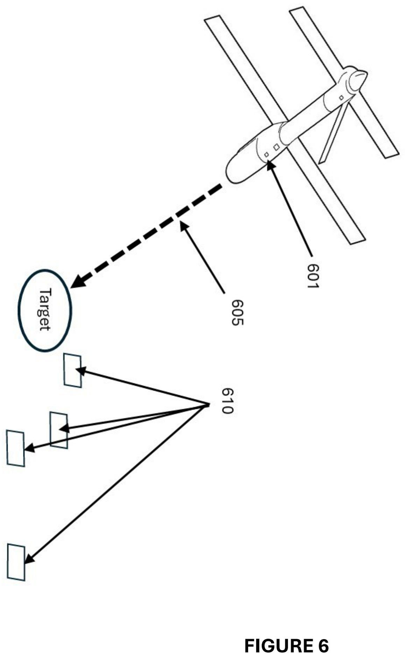

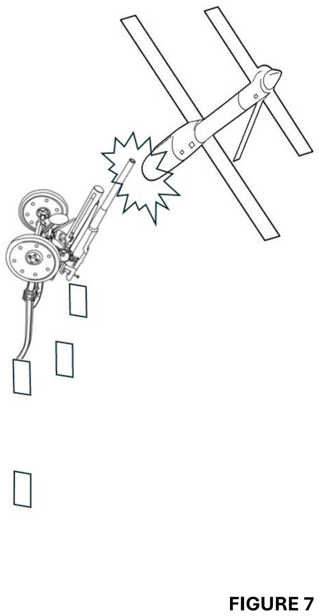

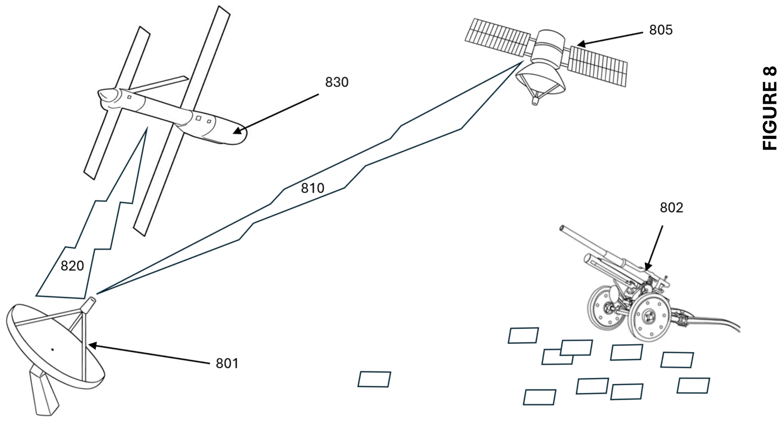

Figure 6 shows the attack drone (601) heading to the target, which it has located based on imaging the remaining unmoved and undefaced TIs (610) by plotting a course (605). Figure 7 shows the attack drone hitting the target successfully. Even in an EM-contested area, low data rate communication (perhaps around 10 to 100 bits per second) may be possible even in the presence of jamming. This is not sufficient to allow visual images to be transmitted, but is enough to update the attacking drone with the new coordinates of an existing target, or the coordinates of a newly-identified target. An example is shown in Figure 8, where the artillery piece (802) has been moved in response to the dropping of the CRIMs; the opposing army is attempting to avoid the impending drone attack.

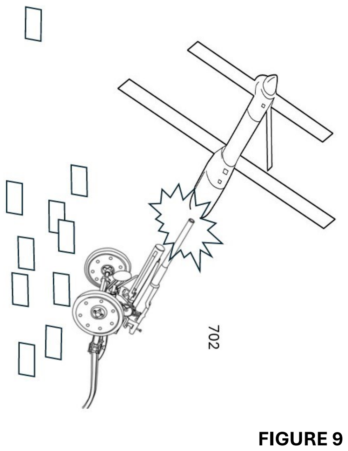

New and updated image(s) are recorded by satellite (or other high altitude surveillance device) (805) and transmitted as an uncontested high-bandwidth radio signal 810 back to a base (801) where a determination of the new position of the target artillery piece (802) is made, relative to the TI positions. This updated set of target coordinates is much more concise than any image, and easily transmitted to the attacking drone (830) over a low data-rate radio link (820) in a few hundred bytes. Figure 9 shows the attacking drone hitting the target in the new target position.

**Brief Description of the Drawings**

**Figure 1:** An aircraft (101), such as a drone or manned aircraft, carrying a plurality of Target Indicators (TIs) (102), approaches a target (110) from a high altitude. The TIs are securely held by a controlled release mechanism (105) for deployment around the target area.

**Figure 2:** Release of TIs (210) from the aircraft upon activation of the release mechanism (205), either remotely commanded or autonomously based on pre-determined location parameters, allowing TIs to scatter around the target.

**Figure 3:** The TIs (301) settle on the ground near the target, demonstrating their dispersal pattern upon release from the aircraft.

**Figure 4:** Various options for capturing images of the deployed TIs around the target, including satellite (405), manned aircraft (410), or surveillance drone (415), which relay images to the command center for target localization.

**Figure 5:** An attack drone (501) utilizing a camera and onboard computer to identify TIs in the battlefield using projective geometry. The drone ignores defaced (520) and displaced (530) TIs, relying only on TIs whose relative positioning has not changed (510) for target location.

**Figure 6:** The attack drone (601) navigates towards the target using identified unmoved TIs (610) (as determined to be the largest set of TIs whose relative positioning has not changed), plotting an accurate course (605) based on their positions.

**Figure 7:** The attack drone successfully impacts the target, guided accurately by the stable TIs.

**Figure 8:** Update of the attack drone's target location using low-data-rate radio signals (810 and 820) relayed through a satellite (805), which provides updated coordinates when the target position (802) shifts.

**Figure 9:** Illustration of the attack drone adjusting its trajectory to accurately engage the target at its new location after receiving updated coordinates.

**Figure 10:** Example of various fiducial markers, including QR codes and Apriltags, used as Computer-Readable Image Markers (CRIMs) for positioning and targeting purposes.

**Figure 11:** As for Figure 10, a variety of fiducial markers that may be used as Computer-Readable Image Markers (CRIMs) for positioning and targeting purposes.

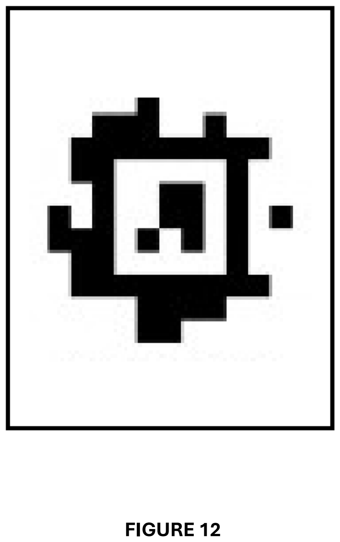

**Figure 12.** Schematic of an example "CRIM" - an apriltag from family 49H12 printed on paper or plastic sheet. This may be A4, A3, A2, A1 or even A0 size, for example. The code number of this code is 49, but a large selection of different code numbers on different sheets should be used.

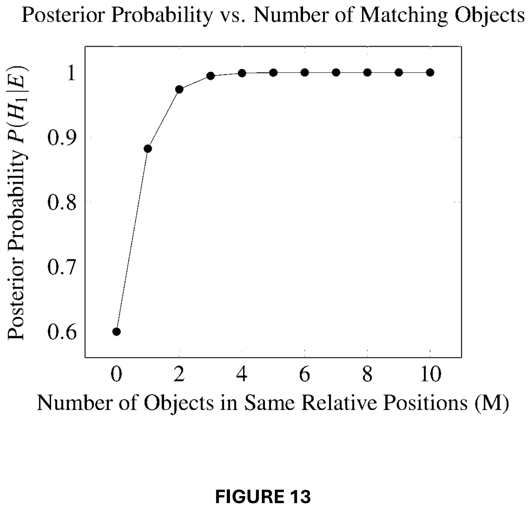

**Figure 13:** Graph of the probability of a valid coordinate system according to the number of surviving (unmoved, undestroyed) CRIM TIs, according to the Bayesian model developed in the text.

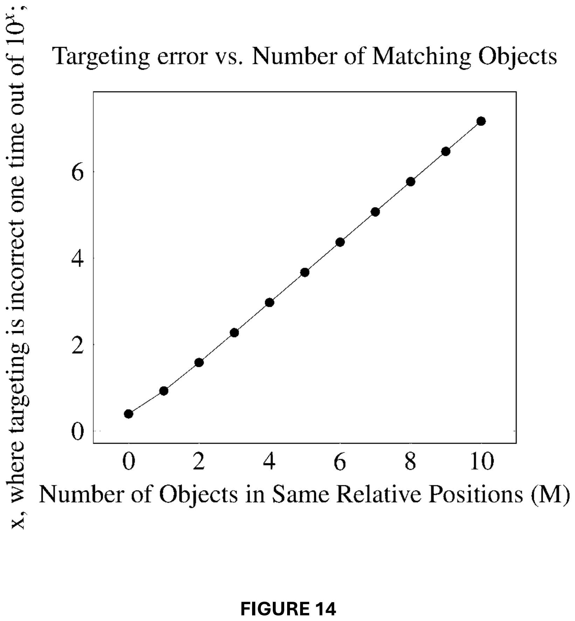

**Figure 14:** Graph of the probability of a valid coordinate system according to the number of surviving (unmoved, undestroyed) CRIM TIs, according to the Bayesian model developed in the text. Here a logarithmic vertical axis is used, so that it is clear that the chances of an error in target location become vanishingly small with a modest number of undisturbed TIs. For example, even if 90% of the TIs are disturbed or destroyed, 8 undisturbed CRIM TIs are sufficient to ensure that all but one in a million target location attempts may be accurate.

**List of Reference Signs**

| | |
|---|---|
| **101** | Aircraft (e.g., drone or manned aircraft) |
| **102** | Target Indicators (TIs), carried by the aircraft |
| **105** | Controlled release mechanism for TIs |
| **110** | Target / aimpoint |
| **205** | Release mechanism (activation in Figure 2) |
| **210** | TIs released from the aircraft |
| **301** | TIs settled on the ground |
| **401** | Radio receiver at command/base |
| **405** | Satellite imaging platform |
| **410** | Manned aircraft imaging platform |
| **415** | Surveillance drone imaging platform |
| **501** | Attack drone with camera and onboard computer |
| **510** | TIs whose relative positioning has not changed (stable set) |
| **520** | Defaced TI (ignored) |
| **530** | Displaced TI (ignored) |
| **601** | Attack drone (navigation phase) |
| **605** | Computed course/trajectory to target |
| **610** | Unmoved/stable TIs used for navigation |
| **801** | Base/command centre |
| **802** | Updated target position |
| **805** | Relay satellite (update link) |
| **810** | Low-data-rate uplink/downlink signal (first leg) |
| **820** | Low-data-rate uplink/downlink signal (second leg) |
| **830** | Attacking drone receiving updated coordinates |

*Note:* Reference signs are provided solely to aid understanding of the drawings and do not limit the scope of the claims.

**Detailed Description of Embodiments**

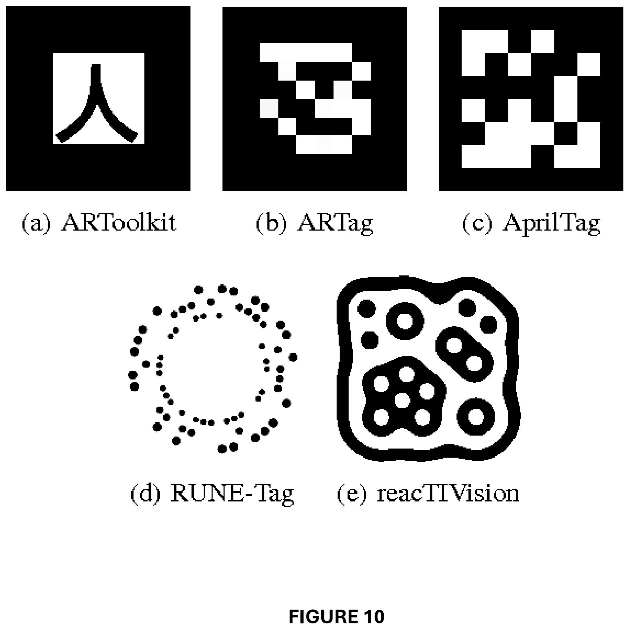

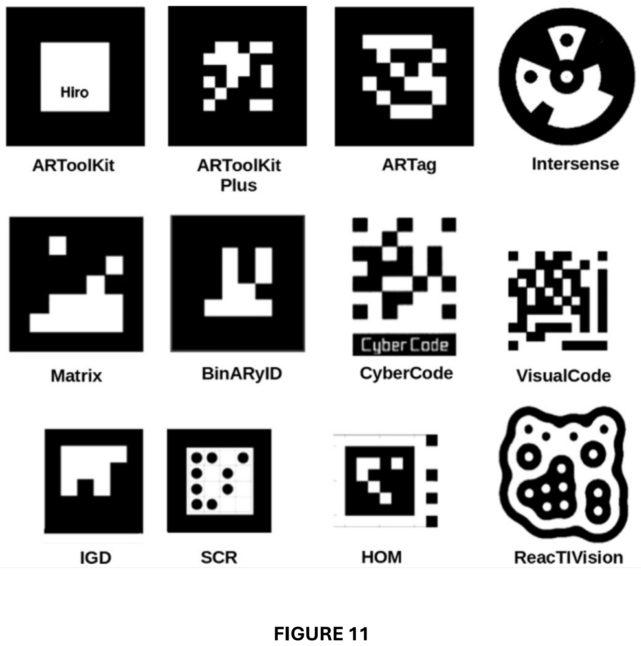

**(i) CRIM deployment and stabilization.** In one embodiment, computer-readable image markers (CRIMs) are printable planar fiducials fabricated on thin polymer substrates (e.g. PET, PI) with overall side length in the range of 100 mm to 500 mm for high-altitude imaging, or 30 mm to 100 mm for lower-altitude platforms. Each CRIM bears a unique, machine-decodable symbol (e.g. April-style coding, though other systems are possible[6, 7, 8, 9], as shown in Figures 10 and 11) surrounded by a high-contrast border and optional registration corners. *Anchoring.* To reduce wind drift after deployment, each CRIM includes a mass-increasing anchor that takes up environmental moisture. Non-limiting examples include superabsorbent polymers (e.g. sodium polyacrylate), hygroscopic salts (e.g. $CaCl_2$, LiCl), or layered sachets combining a moisture-wicking veil and an absorbent core. The anchor may be (a) perimeter-distributed to resist curling, (b) centrally located to promote flat settling, or (c) arranged in a cross pattern to balance both. The dry mass is selected so that post-hydration mass increases by $\times$(2 to 10), yielding a target area density of 150 g m$^{-2}$ to 600 gm$^{-2}$ depending on expected surface winds. *Dual-sided coding.* A dual-sided CRIM can be realised by printing a code on each face with a known relative rotation (e.g. 90°) so that at least one code is decodable regardless of the landing orientation. Where desired, identical IDs may be printed on both faces to simplify inventory management. *Deployment patterns.* CRIMs may be dispersed in a ring, sector, or random pattern around a nominal target coordinate with a characteristic radius $R$ (e.g. 50m to 300m), with density tapered radially to limit material usage. A non-limiting guidance is a mean inter-CRIM spacing of 0.1R-0.25R, guaranteeing multiple non-collinear configurations within any 30° sector. *Spectral variants.* To remain inconspicuous to the eye yet easily detected, inks and laminates may be chosen so that the CRIM is high-contrast in a selected band (e.g. near-IR 800-900 nm, or UV-excited fluorescence) while presenting neutral reflectance in visible light (metameric camouflage). Section (v) details spectral options.

**(ii) Determining UAV Pose from CRIM Imagery** The UAV camera pose (rotation R and translation t) with respect to deployed Computer-Readable Image Markers (CRIMs) is estimated using standard projective geometry and the perspective-n-point (PnP) formulation. Let K denote the calibrated intrinsic matrix. For a 3D world point $X = (X, Y, Z, 1)^{\tau}$ (e.g. a CRIM centre or corner) and its detected image point $x = (u, v, 1)^{\tau}$, the pinhole model is

$$s\,x \;=\; K\,[\,R\,|\,t\,]\,X,$$

where s is a nonzero scale. This relationship is used to form point-wise correspondences between known 3D CRIM geometry and detected 2D image features.

**Linear pose initialisation (DLT).** Stacking two or more CRIM correspondences yields a homogeneous linear system A $\xi$ = 0 in the unknown extrinsics (embedded in $\xi$), which can be solved (up to scale) by SVD to provide an initial pose estimate (Direct Linear Transformation).

**Nonlinear refinement.** Starting from the DLT seed, the pose is refined by minimising the sum of squared reprojection errors

$$\min_{R,t} \; \sum_i \left\| x_i - \pi\big(K\,[R\,|\,t]\,X_i\big) \right\|^2,$$

using a robust iterative method (e.g. Levenberg-Marquardt). When many CRIMs are visible, optional bundle adjustment jointly optimises pose over all inliers to further reduce reprojection error. :contentReferenceindex=4

**Planar deployment and homography.** For many deployments where CRIMs lie on (or are well-approximated by) a ground plane $Z = 0$, a relatively simple homography H maps between ground and image: $sx = H\,X$, with $X = (X, Y, 1)^{\tau}$. The homography recovers the camera's yaw/roll relative to the plane and the translation up to scale; with known camera height or an altimetric prior, the absolute translation is obtained by back-projection to the ground. In practice the workflow is: detect/identify CRIMs; estimate H (RANSAC); recover $R, t$ consistent with K and $H$; and finalise with the PnP refinement above. Pose solutions are gated by an RMS reprojection threshold; CRIMs that are defaced, displaced, or geometrically inconsistent are excluded. Accuracy improves with calibration quality (known K and distortion), wide spatial distribution of CRIMs in view, and sufficient correspondences; additional detections enable bundle adjustment to further reduce error.

**Imaging, mapping, and geometry.** A wide-area imaging device (fixed-wing pod, multirotor gimbal, satellite-style pushbroom or frame imager) acquires nadir or near-nadir imagery with known or estimable intrinsics **K** and attitude from IMU/INS. *Planar mapping.* For near-planar terrain, a projective model suffices. From detected CRIM corner sets $\{\mathbf{x}_i\}$ and their corresponding world-plane points $\{\mathbf{X}_i\}$ (unknown up to scale/translation), a homography $\mathbf{H} \in \mathbb{R}^{3\times3}$ is estimated by DLT with RANSAC outlier rejection:

$$\mathbf{x}_i \sim \mathbf{H}\,\tilde{\mathbf{X}}_i, \qquad \text{solve } \mathbf{h} = \arg\min_{\mathbf{h}} \|\mathbf{A}\mathbf{h}\| \text{ s.t. } \|\mathbf{h}\| = 1 \qquad\qquad \text{(H1)}$$

where $\tilde{\mathbf{X}}_i$ are homogeneous plane points and $\mathbf{A}$ is the DLT design matrix. A refined $\mathbf{H}$ may be obtained by non-linear optimisation (e.g. Levenberg-Marquardt) minimising a robustified reprojection error:

$$\min_{\mathbf{H}} \sum_i \rho\left(\left\| \mathbf{x}_i - \pi\left(\mathbf{H}\,\tilde{\mathbf{X}}_i\right) \right\|^2\right) \qquad\qquad \text{(H2)}$$

with $\rho(\cdot)$ a M-estimator (Huber/Tukey) and $\pi(\cdot)$ homogeneous normalisation. *Target localisation.* The target's world-plane

coordinate $\mathbf{X}_*$ is computed from its image measurement $\mathbf{x}_*$ via $\tilde{\mathbf{X}}_* \sim \mathbf{H}^{-1}\tilde{\mathbf{x}}_*$, then expressed in the mission CRS (e.g. local ENU). Where altimetry varies, a piecewise-planar mosaic or a 2.5D DEM may be used; then solve a PnP or planar-plus-height variant using $\mathbf{K}$, attitude priors, and CRIM correspondences. *Onboard subset solution.* For the attack vehicle, a lightweight pipeline decodes CRIM IDs, fetches their last known plane coordinates from an onboard table, and computes a fresh $\mathbf{H}$ from the currently visible stable subset (Section (iii)), updating $\mathbf{X}_*$ at 2 Hz to 10 Hz.

In summary, known 3D CRIM geometry plus calibrated imaging yields a reliable K[R | t] estimate via DLT+PnP with robustified residuals, enabling back-projection of target coordinates and autonomous guidance even when only a vetted subset of CRIMs remains visible.

**(iii) Robust selection of stable CRIM subsets.** Not all deployed CRIMs remain stationary. The system therefore scores each CRIM's reliability and forms the largest geometrically consistent subset. *Graph formulation.* Build a graph G = *(V, E)* over detected CRIMs V, with edge weights measuring pairwise invariants (e.g. relative bearing, normalised baseline length) between two epochs $t_0$, $t_1$:

$$w_{ij} = \exp\left(-\tfrac{1}{2}\|\Delta\boldsymbol{\phi}_{ij}\|_{\Sigma^{-1}}^2\right), \quad \Delta\boldsymbol{\phi}_{ij} = \begin{bmatrix} \Delta\theta_{ij} & \Delta r_{ij} \end{bmatrix}^\top \qquad \text{(G1)}$$

Seek a maximum-weight induced subgraph exceeding thresholds on internal consistency and cardinality (e.g. $M \geq 4$ for homography, preferably $M \geq 6$). *Bayesian reliability.* Alternatively, assign a latent Bernoulli variable $z_i \in \{0, 1\}$ per CRIM (stable/unstable). Given observed displacements D, define likelihoods

$$p(\mathcal{D} \mid z_i=1) \propto \mathcal{N}(0, \Sigma_s), \quad p(\mathcal{D} \mid z_i=0) \propto \text{heavy-tailed}(\Sigma_u) \qquad \text{(B1)}$$

and infer posteriors $p(z_i=1 \mid \mathcal{D})$ via EM or variational updates. Select $\mathcal{S} = \{i : p(z_i=1) \geq \tau\}$ and solve (H1)-(H2) on $\mathcal{S}$. *Decision rules.* A CRIM is discarded if (a) its posterior stability probability falls below $\tau$ (e.g. 0.6-0.8), (b) it flips ID parity or fails checksum, or (c) it causes a large normalised residual after homography refinement (one-point RANSAC retest). The subset is re-evaluated whenever $\geq 1$ new CRIM enters/leaves view or residuals exceed a dynamic threshold.

**(iv) Operations in contested EM environments.** The system assumes comms can be intermittent or denied. The navigation stack therefore remains fully functional with onboard sensing alone and accepts occasional low-rate updates. *Low-rate channel.* A unidirectional link (e.g. sub-GHz or L-band) may carry periodic target coordinate corrections and integrity flags at ~10-100 bps. Frames include a compact header with mission ID, a quantised *(x, y)* payload, CRC, and an interleaver to mitigate burst errors. *Compute footprint.* The onboard pipeline fits in $\lesssim$100-200 MFLOP/s: thresholding $\rightarrow$ quad/corner detection $\rightarrow$ code decode $\rightarrow$ subset selection $\rightarrow$ $\mathbf{H}$-update $\rightarrow$ guidance law. No continuous FPV link is required. *Guidance independence.* If the link is lost, the vehicle continues using the last good $\mathbf{X}_*$ and local CRIM-based updates. If a new frame is received, the correction is fused with a gating test before acceptance.

**(v) Night operations and spectral camouflage.** *UV-responsive.* CRIMs may incorporate UV-excitable fluorophores (e.g. 365 nm excitation) with emission in the 400-450 nm band detectable by a camera fitted with a notch/long-pass filter. A short pulse can momentarily increase SNR for detection without sustained illumination. *Near-IR contrast.* Alternatively, print with near-IR-reflective pigments and pair the camera with a visible-blocking, IR-passing filter (e.g. 850nm). The visible appearance is neutral (metameric camouflage), while the IR contrast is high. *Polarisation variants.* A birefringent over-layer or a printed wire-grid pattern can impart a distinct polarisation signature; the imager recovers this using a polariser at two angles to strengthen decoding under specular glare. *Dual-sided handling.* For dual-sided CRIMs, the decoder accepts either orientation; if both faces are seen (e.g. curled edge), an internal consistency rule picks the face with higher code confidence.

**(vi) Failure handling and safety.** *Minimum geometry.* If fewer than $M_{\text{min}}$ stable CRIMs are available (e.g. $M_{min}$ = 4 for planar homography), or if the refined reprojection RMSE exceeds a bound (e.g. >1.5-2.0 pixels after calibration), the guidance mode downgrades and the vehicle either loiters, returns to base, or transitions to a contingency waypoint. *Integrity checks.* The pipeline rejects (a) codes failing checksum/parity, (b) CRIMs whose spectral response does not match the expected band, (c) improbable geometry (e.g. sudden scale jump inconsistent with airspeed/altitude), and (d) identities observed at mutually incompatible poses within a short interval (spoofing heuristic). *Safe behaviour.* If integrity fails persistently over $T_{\text{fail}}$ (e.g. 3-10s), the system commands a safe abort profile. If the mission authorises it, a low-power comms ping can request a last-known coordinate; if none is received, the abort completes. *Data logging.* The subset decisions, IDs, residuals, and accepted corrections are logged at low rate (~1-5Hz) for post-mission audit and to refine CRIM placement in future sorties.

**Detailed Calculations**

## A. Planar homography estimation and refinement

Let $\mathcal{S} = \{i = 1, \ldots, M\}$ be the index set of CRIMs selected as stable (Section (iii)). Image points $x_i = (u_i, v_i, 1)^\tau$ and corresponding plane points $\mathbf{X}_i = (X_i, Y_i, 1)^\tau$ (homogeneous) satisfy

$$\lambda_i \, \mathbf{x}_i = \mathbf{H} \, \mathbf{X}_i, \qquad \mathbf{H} \in \mathbb{R}^{3 \times 3}, \ \det \mathbf{H} \neq 0. \tag{1}$$

**DLT.** Stack 2M equations **Ah = 0** with **h** = vec(**H**), and solve

$$\widehat{\mathbf{h}} = \arg \min_{\|\mathbf{h}\|=1} \|\mathbf{A}\mathbf{h}\|_2, \quad \widehat{\mathbf{H}} = \mathrm{unvec}(\widehat{\mathbf{h}}), \tag{2}$$

after normalising point sets (centroid+isotropic scaling). Use RANSAC to reject outliers.

**Nonlinear refinement (robust).** Let $\pi(\mathbf{y}) = \left( \frac{y_1}{y_3}, \frac{y_2}{y_3} \right)^\top$. Minimise the robust reprojection energy

$$\widehat{\mathbf{H}} = \arg \min_{\mathbf{H}} \sum_{i \in \mathcal{S}} \rho \Big( \big\| \mathbf{x}_i - \pi(\mathbf{H} \, \mathbf{X}_i) \big\|_{\Sigma^{-1}}^2 \Big), \tag{3}$$

with Huber/Tukey $\rho(\cdot)$ and pixel covariance $\Sigma = \sigma^2\mathbf{I}$. Optimise by Levenberg-Marquardt using the Jacobian

$$\mathbf{J}_i = \frac{\partial \, \pi(\mathbf{H}\mathbf{X}_i)}{\partial \, \mathrm{vec}(\mathbf{H})} \ \in \ \mathbb{R}^{2 \times 9}. \tag{4}$$

**Target back-projection.** Given a target image point $x_*$, recover plane coordinate $\mathbf{X}_*$ by

$$\tilde{\mathbf{X}}_* \sim \mathbf{H}^{-1}\tilde{\mathbf{x}}_*, \qquad \mathbf{X}_* = \frac{1}{\tilde{X}_{*,3}} \begin{bmatrix} \tilde{X}_{*,1} \\ \tilde{X}_{*,2} \end{bmatrix}. \tag{5}$$

**Covariance** propagation and gating. Linearise (5) at $\hat{\mathbf{H}}$; with image noise $\Sigma_*$ and

$$\mathrm{Cov}\big(\mathrm{vec}(\widehat{\mathbf{H}})\big) \approx \big( \textstyle\sum_i \mathbf{J}_i^\top \Sigma^{-1} \mathbf{J}_i \big)^{-1},$$

$$\mathrm{Cov}(\mathbf{X}_*) \ \approx \ \mathbf{G}_H \, \mathrm{Cov}(\mathrm{vec}(\widehat{\mathbf{H}})) \, \mathbf{G}_H^\top \ + \ \mathbf{G}_x \, \Sigma_* \, \mathbf{G}_x^\top, \tag{6}$$

where $G_H = \partial\mathbf{X}_*/\partial\mathrm{vec}(\mathbf{H})$ and $G_x = \partial\mathbf{X}_*/\partial\mathbf{x}_*$. Accept an update if the normalised innovation (Mahalanobis) is bounded:

$$d^2 = \big(\mathbf{X}_* - \mathbf{X}_{*,\mathrm{pred}}\big)^\top \mathrm{Cov}(\mathbf{X}_*)^{-1} \big(\mathbf{X}_* - \mathbf{X}_{*,\mathrm{pred}}\big) \ \leq \ \chi^2_{2,\alpha}. \tag{7}$$

## B. 2.5D / PnP variant (uneven terrain)

If a lightweight DEM $z = f(X, Y)$ is available, lift plane points to $\mathbf{P}_i = (X_i, Y_i, f(X_i, Y_i))^\tau$ and solve a PnP with known intrinsics **K**:

$$\lambda_i \tilde{\mathbf{x}}_i = \mathbf{K} \left[ \mathbf{R} \mid \mathbf{t} \right] \tilde{\mathbf{P}}_i, \tag{8}$$

refining (R, t) by reprojection. The target $P_*$ is then obtained by ray-DEM intersection.

### C. Stability inference via EM (subset selection)

Let $z_i \in \{0, 1\}$ denote CRIM i being stable/unstable. Using two frames $t_0$, $t_1$, define a feature displacement $\delta_i$ (e.g., change in relative bearing/scale w.r.t. provisional geometry). Model

$$p(\boldsymbol{\delta}_i \mid z_i = 1) = \mathcal{N}(\mathbf{0}, \Sigma_s), \qquad\qquad p(\boldsymbol{\delta}_i \mid z_i = 0) = \mathcal{St}(\mathbf{0}, \Sigma_u, \nu), \qquad (9)$$

with Student-t heavy tails for unstable points. Prior $\pi$ = Pr[$z_i$ = 1].

**E-step.** For each i,

$$\gamma_i \;\triangleq\; \mathrm{Pr}[z_i = 1 \mid \boldsymbol{\delta}_i] \;=\; \frac{\pi \, \mathcal{N}(\boldsymbol{\delta}_i; \mathbf{0}, \Sigma_s)}{\pi \, \mathcal{N}(\boldsymbol{\delta}_i; \mathbf{0}, \Sigma_s) + (1 - \pi) \, \mathcal{St}(\boldsymbol{\delta}_i; \mathbf{0}, \Sigma_u, \nu)}. \qquad (10)$$

**M-step.** Update mixture parameters (diagonal or full $\Sigma_s$, $\Sigma_u$), e.g.

$$\pi^{\mathrm{new}} = \frac{1}{M} \sum_i \gamma_i, \qquad \Sigma_s^{\mathrm{new}} = \frac{\sum_i \gamma_i \, \boldsymbol{\delta}_i \boldsymbol{\delta}_i^\top}{\sum_i \gamma_i}, \qquad (11)$$

$$\Sigma_u^{\mathrm{new}} = \frac{\sum_i (1 - \gamma_i) \, w_i \, \boldsymbol{\delta}_i \boldsymbol{\delta}_i^\top}{\sum_i (1 - \gamma_i)}, \quad w_i = \frac{\nu + q_i}{\nu + \boldsymbol{\delta}_i^\top \Sigma_u^{-1} \boldsymbol{\delta}_i}, \; q_i = \mathrm{dim}(\boldsymbol{\delta}_i), \qquad (12)$$

iterating until convergence. Select $\mathcal{S}$ = {$i : \gamma_i \geq \tau$} and re-solve (3) on $\mathcal{S}$.

### D. Graph consensus fallback

Define pairwise invariants $\phi_{ij} = [\theta_{ij}, r_{ij}]^\tau$ (bearing/normalised distance). Between epochs, $\Delta\phi_{ij} = \phi_{ij}(t_1) - \phi_{ij}(t_0)$ and edge weight

$$w_{ij} = \exp\left(-\tfrac{1}{2}\Delta\phi_{ij}^\top \Sigma^{-1}\Delta\phi_{ij}\right). \qquad (13)$$

Find a maximum-weight induced subgraph of cardinality $\geq M_{\mathrm{min}}$ (e.g. via greedy pruning: repeatedly drop node with lowest summed weight until all internal residuals pass a bound), then run (2)-(3).

### E. Lightweight update logic and thresholds

At each frame:

    1. Decode CRIM IDs; fetch nominal plane points from the mission table.

    2. Run a single EM sweep (10)-(12) with previous parameters as warm start; build $\mathcal{S}$.

    3. If |$\mathcal{S}$| < $M_{\mathrm{min}}$ or RMS reprojection > $\varepsilon$ (e.g. 1.5-2.0 px), hold guidance and do not update.
    4. Otherwise, compute **H** with (3); back-project **X**$_*$ via (5).
    5. Gate with (7); if accepted, commit **X**$_*$ and log residuals.

### F. Low-rate payload quantisation (optional)

Target increments $\Delta X_* = [\Delta x, \Delta y]^\tau$ are quantised for a *B*-bit frame:

$$\hat{\Delta}x = \mathrm{clip}\left(\mathrm{round}\left(\tfrac{\Delta x}{q}\right), -2^{b-1}, 2^{b-1} - 1\right), \quad \hat{\Delta}y = \mathrm{clip}\left(\mathrm{round}\left(\tfrac{\Delta y}{q}\right), -2^{b-1}, 2^{b-1} - 1\right),$$

$$(14)$$

with step $q$ (e.g. 0.5-2 m) and b bits per axis. A CRC over the packed payload supports integrity; interleaving combats burst errors. Onboard, recovered $\Delta X_*$ is fused via the gating test (7).

**GCV-Based Screening of External Fixes**

**Setup (whitened WLS view).** Collect all linearised residuals into $\mathbf{r} = \mathbf{y}$ - J $\delta$, where $\delta$ is the Gauss-Newton state increment, **J** the Jacobian, and **y** the stacked measurement vector. Let the block-diagonal weight $\mathbf{W} = \Sigma^{-1}$ include both IMU preintegration factors and external fixes (GPS/vision beacons) after whitening. The normal equations are

$$\delta^\wedge = \arg\min_\delta \ \left\| \mathbf{W}^{1/2}(\mathbf{y} - \mathbf{J}\delta) \right\|_2^2 \quad \Rightarrow \quad \delta^\wedge = (\mathbf{J}^\top \mathbf{W} \mathbf{J})^{-1} \mathbf{J}^\top \mathbf{W} \mathbf{y}. \qquad (15)$$

Predicted measurements are ŷ = J$\delta^\wedge$ = Sy with the *hat matrix*

$$\mathbf{S} = \mathbf{J} (\mathbf{J}^\top \mathbf{W} \mathbf{J})^{-1} \mathbf{J}^\top \mathbf{W}. \qquad (16)$$

For each external fix i, let $h_i \triangleq [\mathbf{S}]_{ii}$ denote its leverage and $r_i \triangleq y_i - \widehat{y_i}$ its residual.

**Leave-one-out (LOO) and GCV residuals.** In linear WLS, the LOO residual for datum *i* (solution recomputed with *i* omitted) is available *without* refitting:

$$r_i^{(-i)} \ = \ \frac{r_i}{1 - h_i}. \qquad (17)$$

A global *GCV* scale estimate is

$$\widehat{\sigma}_{\mathrm{GCV}}^2 = \frac{\|\mathbf{r}\|_2^2 / N}{\left(1 - \frac{1}{N}\mathrm{tr}(\mathbf{S})\right)^2}, \qquad N = \# \text{ measurements}, \qquad (18)$$

and a practical per-fix *studentised* score is

$$t_i \ = \ \frac{r_i^{(-i)}}{\widehat{\sigma}_{\mathrm{GCV}}} \ . \qquad (19)$$

Large $|t_i|$ with large leverage $h_i$ indicates a fix that strongly pulls the solution yet disagrees with the IMU-constrained trajectory.

**Efficient computation.** Compute diag(S) without forming **S** explicitly:

- QR route (numerically robust): factor **QR = W$^{1/2}$J**; then **S = QQ$^\tau$** and $h_i = \|\mathbf{q}_i\|_2^2$ where $\mathbf{q}_i^\top$ is row *i* of **Q.**

- Cholesky route: with **H = J$^\tau$WJ = LL$^\tau$,** for the (whitened) row vector $\phi_i \triangleq \mathbf{e}_i^\top \mathbf{W}^{1/2} \mathbf{J}$ solve $\mathbf{L}\mathbf{z}_i = \phi_i^\top$, then

$h_i = \|\mathbf{z}_i\|_2^2$ .

**Screening policy.** A simple and effective policy is:

1. Solve (15), compute residuals $\{r_i\}$, leverages $\{h_i\}$, and $t_i$ via (17)-(19).
2. Mark external fixes with $|t_i| > \tau_t$ (e.g. $\tau_t$ = 3-4) or with joint criterion $|t_i| > \tau_t$ and $h_i > \tau_h$, (e.g. $\tau_h$ = 0.2).
3. Remove (or sharply downweight) the worst offender; relinearise and repeat until all remaining fixes satisfy the test *or* a minimum count is reached.

This culls fixes that are inconsistent with IMU-implied displacements while preserving well-agreeing, low-leverage fixes that do not unduly distort the trajectory.

**Notes and variants.**

- The method assumes the system is suitably whitened (IMU correlations handled in **W).** If IMU process noise is time-correlated, preintegrate with the standard covariance propagation so that **W** reflects correlations.

- If many fixes are adversarial or clustered in time, prefer *downweighting* (e.g. switchable constraints) over hard deletion to avoid bias from wholesale removal.

- The GCV objective targets predictive risk under (approx.) Gaussian noise. In heavy-tailed or spoofed regimes, combine GCV screening with the robust kernels in (3) and the EM/graph procedures already described.

---

**Algorithm 1** GCV-based screening prior to Algorithm 2

---

**Require:** Whitened Jacobian $\mathbf{J}$, measurements $\mathbf{y}$, weight $\mathbf{W}$; thresholds $(\tau_i, \tau_h)$

**Ensure:** Indices of trusted fixes $\mathcal{I}_{\text{keep}}$

1: **repeat**
2:     Solve (15); compute residuals $\mathbf{r}$
3:     Compute leverages $h_i$ via QR or Cholesky; set $r_i^{(-i)} = r_i/(1 - h_i)$
4:     Estimate $\widehat{\sigma}_{\text{GCV}}$ via (18); $t_i = r_i^{(-i)}/\widehat{\sigma}_{\text{GCV}}$
5:     Find worst offender $k = \arg\max_i \left( |t_i| \cdot \mathbf{1}[h_i > \tau_h] \right)$
6:     **if** $|t_k| \leq \tau_t$ **then break**
7:     **end if**
8:     Remove or downweight fix $k$ (e.g. scale its block in $\mathbf{W}$ by $\alpha \ll 1$); relinearise
9: **until** no offenders or #fixes $\leq$ minimum
10: **return** surviving indices $\mathcal{I}_{\text{keep}}$

---

**Algorithm 1: GCV Screening of External Fixes (pre-pass).**

**Algorithm Summaries (Function and Effect)**

**Algorithm 2** - **Onboard CRIM-based Guidance Update.** *Function:* Runs the per-frame loop: detect/ decode CRIMs, infer the stable subset, robustly refine the homography, back-project the target, and gate the update before committing it to guidance. *Effect:* Maintains accurate target coordinates with low compute and no continuous comms; automatically withholds updates when the geometry is under-constrained or inconsistent, improving safety and fault-tolerance.

**Algorithm 3** - **Single EM Sweep for Stability Posteriors.** *Function:* Performs one EM pass to estimate, for each CRIM, the posterior probability of being stable versus unstable under a Gaussian/Student-t mixture. *Effect:* Produces calibrated stability scores in real time, enabling selection of the largest consistent subset and reducing the influence of displaced, spoofed, or noisy markers on the geometry solve.

**Algorithm 4 - Greedy Graph Pruning for Consistency.** *Function:* Builds a pairwise-consistency graph over candidate CRIMs and greedily removes nodes with the weakest average support until internal consistency and minimum cardinality are met. *Effect:* Fast fallback when refinement residuals are high; removes outliers coherently, improving robustness of the homography re-solve without expensive global optimisation.

**Algorithm 5** - **Low-Rate Target-Delta Encoding and Fusion.** *Function:* Quantises small target coordinate corrections into a few bits, adds CRC/interleaving, and fuses any received update only if it passes statistical gating. *Effect:* Enables sparse supervisory corrections over 10-100 bps links while resisting corruption and spoofing; keeps the vehicle autonomous when links are absent and safely benefits from them when available.

---

**Algorithm 2** Onboard CRIM-based Guidance Update (per frame at $f$ Hz)

---

**Require:** Previous parameters $(\pi, \Sigma_s, \Sigma_u, \nu)$, previous $\mathbf{H}$, mission table of CRIM IDs $\rightarrow$ nominal plane points, image frame $\mathcal{I}_t$

**Ensure:** Optional commit of new $\mathbf{H}$ and $\mathbf{X}_*$

1: $\mathcal{D} \leftarrow$ Detect quads/corners; decode CRIM IDs with checksum/parity

2: $\mathcal{V} \leftarrow$ Visible CRIMs with valid IDs; fetch nominal plane points $\{\mathbf{X}_i\}$

3: $\{\boldsymbol{\delta}_i\} \leftarrow$ Form stability features (bearing/scale deltas) vs. last good geometry

4: $(\gamma_i, \pi, \Sigma_s, \Sigma_u) \leftarrow$ SINGLEEMSWEEP$(\{\boldsymbol{\delta}_i\}, \pi, \Sigma_s, \Sigma_u, \nu)$                $\triangleright$ Alg. 3

5: $\mathcal{S} \leftarrow \{i \in \mathcal{V} : \gamma_i \geq \tau\}$                $\triangleright$ Candidate stable subset

6: **if** $|\mathcal{S}| < M_{\min}$ **then**

7:     **goto** Hold: do not update guidance; request next frame

8: **end if**

9: $\widehat{\mathbf{H}} \leftarrow$ ROBUSTHOMOGRAPHYREFINE$(\{\mathbf{x}_i, \mathbf{X}_i\}_{i \in \mathcal{S}})$                $\triangleright$ (Eq. 3)

10: **if** RMS_reproj$(\widehat{\mathbf{H}}) > \varepsilon$ **then**

11:     $\mathcal{S} \leftarrow$ GRAPHPRUNE$(\mathcal{S})$                $\triangleright$ Alg. 4

12:     **if** $|\mathcal{S}| \geq M_{\min}$ **then**

13:         $\widehat{\mathbf{H}} \leftarrow$ ROBUSTHOMOGRAPHYREFINE$(\mathcal{S})$

14:     **else**

15:         **goto** Hold

16:     **end if**

17: **end if**

18: $\mathbf{X}_* \leftarrow$ BACKPROJECTTARGET$(\widehat{\mathbf{H}}, \mathbf{x}_*)$                $\triangleright$ (Eq. 5)

19: **if** GATEUPDATE$(\mathbf{X}_*, \mathrm{Cov}(\mathbf{X}_*))$ fails **then**                $\triangleright$ (Eq. 7)

20:     **goto** Hold

21: **end if**

22: Commit $\widehat{\mathbf{H}}$ and $\mathbf{X}_*$ to guidance; log residuals and $\mathcal{S}$

23: **Hold:** Maintain current guidance; continue to next frame

---

---

**Algorithm 3** Single EM Sweep for Stability Posteriors

---

**Require:** Features $\{\boldsymbol{\delta}_i\}$, current $(\pi, \Sigma_s, \Sigma_u, \nu)$

**Ensure:** Posteriors $\{\gamma_i\}$ and updated $(\pi, \Sigma_s, \Sigma_u)$

1: **for** each $i$ **do**

2: $\quad \ell_s \leftarrow \mathcal{N}(\boldsymbol{\delta}_i; \mathbf{0}, \Sigma_s); \quad \ell_u \leftarrow \mathcal{St}(\boldsymbol{\delta}_i; \mathbf{0}, \Sigma_u, \nu)$ $\qquad\qquad\qquad\qquad$ $\triangleright$ (Eq. 9)

3: $\quad \gamma_i \leftarrow \dfrac{\pi\,\ell_s}{\pi\,\ell_s + (1-\pi)\,\ell_u}$ $\qquad\qquad\qquad\qquad$ $\triangleright$ (Eq. 10)

4: **end for**

5: $\pi \leftarrow \dfrac{1}{M}\sum_i \gamma_i$

6: $\Sigma_s \leftarrow \dfrac{\sum_i \gamma_i\,\boldsymbol{\delta}_i\boldsymbol{\delta}_i^\top}{\sum_i \gamma_i}$

7: $w_i \leftarrow \dfrac{\nu + q}{\nu + \boldsymbol{\delta}_i^\top \Sigma_u^{-1}\boldsymbol{\delta}_i}; \quad \Sigma_u \leftarrow \dfrac{\sum_i(1-\gamma_i)\,w_i\,\boldsymbol{\delta}_i\boldsymbol{\delta}_i^\top}{\sum_i(1-\gamma_i)}$ $\qquad$ $\triangleright$ (Eq. 12)

8: **return** $\{\gamma_i\}, \pi, \Sigma_s, \Sigma_u$

---

---

**Algorithm 4** Greedy Graph Pruning to Maximise Internal Consistency

---

**Require:** Current subset $\mathcal{S}$, pairwise weights $w_{ij}$ (Eq. 13), bounds $\eta$ (min avg. weight), $M_{\min}$

**Ensure:** Pruned subset $\mathcal{S}$

1: **loop**

2: $\quad$ For $i \in \mathcal{S}$, compute $W_i \leftarrow \dfrac{1}{|\mathcal{S}|-1}\sum_{j\in\mathcal{S}\setminus\{i\}} w_{ij}$

3: $\quad$ **if** $\min_{i\in\mathcal{S}} W_i \geq \eta$ **or** $|\mathcal{S}| \leq M_{\min}$ **then**

4: $\qquad$ **break**

5: $\quad$ **else**

6: $\qquad$ Remove $k \leftarrow \arg\min_i W_i$ from $\mathcal{S}$

7: $\quad$ **end if**

8: **end loop**

9: **return** $\mathcal{S}$

---

---

**Algorithm 5** Low-Rate Target-Delta Encoding and Fusion

---

**Require:** Proposed increment $\Delta \mathbf{X}_* = [\Delta x, \Delta y]^\top$, quantiser step $q$, bits $b$

**Ensure:** Optional fusion of decoded increment

1: $\hat{\Delta x} \leftarrow \text{clip}(\text{round}(\Delta x/q), -2^{b-1}, 2^{b-1} - 1); \quad \hat{\Delta y} \leftarrow \text{clip}(\text{round}(\Delta y/q), -2^{b-1}, 2^{b-1} - 1)$
   $\triangleright$ (Eq. 14)

2: Pack payload with CRC; interleave; transmit over 10 100 bps channel

3: On receive: deinterleave; CRC-check; if fail, discard

4: Dequantise: $\Delta \tilde{x} \leftarrow q\,\hat{\Delta x}, \; \Delta \tilde{y} \leftarrow q\,\hat{\Delta y}$

5: Candidate update $\mathbf{X}'_* \leftarrow \mathbf{X}_{*,\text{prev}} + [\Delta \tilde{x}, \Delta \tilde{y}]^\top$

6: **if** $\text{GATEUPDATE}(\mathbf{X}'_*, \text{Cov}(\mathbf{X}_*))$ passes **then** $\qquad\qquad\qquad \triangleright$ (Eq. 7)

7:     Commit $\mathbf{X}_* \leftarrow \mathbf{X}'_*$

8: **else**

9:     Discard payload

10: **end if**

---

**Examples**

**Outdoor drop tests with moisture-uptake anchors.** Field tests were conducted on open ground to evaluate (i) mass uptake and time-to-stabilisation of anchors based on sodium polyacrylate (SAP) and calcium chloride ($CaCl_2$), and (ii) the effect on post-deployment drift and visual detectability of CRIMs. CRIM panels (square PET laminates with dual-sided codes) were prepared in two size classes: "large" (300 mm side) and "medium" (150 mm side). Anchors were implemented as edge-perimeter sachets (SAP), central pouches ($CaCl_2$), and cross-pattern sachets (hybrid), each sealed in non-woven envelopes to prevent spillage.

*Protocol.* Panels were released from a small UAV at 30 m to 40 m AGL in light to moderate winds (Beaufort 2-3; mean wind speed $\approx 2\text{ms}^{-1}$ to 5 m s$^{-1}$). Ambient relative humidity during tests was 55% to 75 %, temperature 12 °C to 18 °C with some scattered surface water. After touchdown, each panel's position was tracked from overhead imagery at 1 Hz to 2 Hz, and drift was computed relative to the first settled frame after impact. Moisture uptake was inferred from pre/post mass on a portable scale and cross-checked by image-based sag/settling indicators. Visibility was assessed by contrast-to-noise ratio (CNR) in the operating band (visible or near-IR, depending on the variant).

*Mass uptake and time-to-stabilisation.* SAP perimeter sachets showed a rapid mass increase to between 3 and 7 times the dry anchor mass within 20 min to 60 min, in moist conditions depending on sachet area. $CaCl_2$ central pouches absorbed more slowly but continued gaining mass beyond 30 min, providing a longer stabilisation tail. Hybrid cross-patterns reached a useful area density range of 200 gm$^{-2}$ to 450 gm$^{-2}$ within 30 min to 90 min while maintaining flatness at corners.

*Positional stability.* Across runs, panels with SAP perimeter anchors achieved a "settled" state (drift < 0.01 m over 60 min) sooner than central-only pouches. Once settled, residual drift can be remarkably low; CRIMs left on concrete in a residential area of the North of England were found to have moved less than 50cm and be still useable after over a year (May 2024 to Oct 2025) despite periods of severe weather. Hybrid anchors exhibited the lowest incidence of corner lift and curl.

*Spectral visibility.* Near-IR printed variants (camera with visible-blocking IR-pass filter) delivered CNR improvements of $\approx$ 2-5$\times$ over visible imaging in bright conditions with vegetation background, while remaining visually inconspicuous to observers. UV-responsive variants (365 nm excitation) produced transient fluorescence enabling reliable detection at civil twilight with short pulses (50 ms to 200 ms) and without continuous illumination.

*Dual-sided coding.* Dual-face printing (same ID both sides) eliminated orientation failures: all panels were decodable in at least one face; ambiguous cases (partial curl) were resolved by choosing the higher decoder confidence.

*Notes.* The figures above are representative for the stated conditions. Users may tailor sachet mass, distribution pattern, and laminate stiffness to local wind/humidity regimes. Where available, a simple pre-deployment weather check (wind at 10 m, RH) can be used to select between perimeter/hybrid anchor layouts.

**Industrial Applicability**

The invention is suitable for mass-manufactured deployment in environments where satellite navigation is denied, degraded, or tactically undesirable. Non-limiting examples include:

- **Defence targeting and routeing:** enabling autonomous approach and terminal guidance with minimal communications exposure; hardening against spoofing and marker loss via stability-subset selection.

- **Search-and-rescue and disaster relief:** marking corridors, landing/hand-off zones, and logistics caches where infrastructure and GNSS are compromised; near-IR/UV options support night or smoke-affected operations.

- **Expeditionary engineering and survey:** temporary geodetic frames for equipment placement, bridging, or unmanned ground vehicle pathing, using standard aerial imaging payloads.

- **Training and test ranges:** repeatable, low-cost ground truthing without permanent fixtures; dual-sided codes simplify recovery and reuse.

CRIMs are printable on commodity polymer films with inks/pigments available at scale; anchors use widely available absorbents (e.g. SAPs, $CaCl_2$). The processing pipeline runs on modest embedded compute and interoperates with conventional cameras. Low-bandwidth update paths (10-100 bps) permit sparse supervisory corrections without continuous video links, reducing EW signature and spectrum demand. The overall bill of materials and per-unit weight are compatible with small-UAV carriage and wide-area dispersal. Printable CRIMs and off-the-shelf cameras enable low recurring cost and rapid scale-up. The processing pipeline operates on modest embedded hardware and interoperates with conventional imaging payloads, facilitating field deployment without specialised infrastructure.

**References**

[1] J. Siva and C. Poellabauer. "Robot and Drone Localization in GPS-Denied Areas". In: Mission-Oriented Sensor Networks and Systems: Art and Science. Ed. by H. Ammari. Vol. 164. Studies in Systems, Decision and Control. Cham: Springer, 2019. DOI: 10.1007/978-3-319-92384-0_17.

[2] The Telegraph. Ukraine developing 'unstoppable' AI-powered attack drone. Apr. 2024. URL: https : / / www . telegraph . co . uk / world - news / 2024 / 04 / 08 / ukraine - developing-unstoppable-ai-powered-attack-drone/.

[3] C. Cheng et al. "A Unmanned Aerial Vehicle (UAV)/Unmanned Ground Vehicle (UGV) Dynamic Autonomous Docking Scheme in GPS-Denied Environments". In: Drones 7.10 (2023), p. 613. DOI: 10.3390/drones7100613.

[4] Miguel Oliveira et al. "A ROS framework for the extrinsic calibration of intelligent vehicles: A multi-sensor, multimodal approach". In: Robotics and Autonomous Systems 131 (2020), p. 103558. ISSN: 0921-8890. DOI: 10.1016/j.robot.2020.103558.

[5] AprilRobotics. AprilTag: Visual Fiducial System. Accessed 2025-11-18. 2025.

[6] S. Garrido-Jurado et al. "Automatic generation and detection of highly reliable fiducial markers under occlusion". In: Pattern Recognition 47.6 (2014), pp. 2280-2292. DOI:10.1016/j.patcog.2014.01.005.

[7] "RUNEtag: A high-capacity fiducial marker with strong occlusion resilience". In: Proceedings of the IEEE Conference on Computer Vision and Pattern Recognition (CVPR). See also: https://ieeexplore.ieee.org/document/5995544. 2011.

[8] Michael Kaess et al. AprilTags resources. 2025. URL: https://people.csail.mit. edu/kaess/apriltags/.

[9] Jujiang Liu and Chunxiang Yan. "An integrated UWB-Vision framework for autonomous approach and landing of UAVs in GPS-Denied environments". In: Mathematical Foundations of Computing (2024). DOI: 10.3934/mfc.2024022.

**Claims**

1. A system for autonomous targeting of munitions using Computer-Readable Image Markers (CRIMs), comprising:

   1. a plurality of CRIMs, each having a unique identifier and constructed from lightweight, durable materials;
   2. a chemical anchor integrated with each CRIM, capable of absorbing environmental moisture to increase its weight and stabilize its ground position;

3. an aircraft configured to deploy the plurality of CRIMs around a predefined target area;

4. a high-altitude imaging device configured to capture images of the CRIMs and the target area;

5. a processing unit programmed to analyze the relative stability of each CRIM's position, and to generate a digital map marking the target and CRIMs, wherein the processing unit is configured to ignore CRIMs that exhibit relative positional changes.

2. The system of claim 1, wherein the processing unit utilizes projective geometry to determine the coordinates of the target based on the relative positions of stable CRIMs.

3. The system of claim 1, wherein information-theoretic principles are applied to validate the relative stability of CRIMs, enabling target localization despite potential movement or destruction of a subset of CRIMs.

4. A method for autonomous navigation of a drone to a target in a GPS-denied environment, comprising the steps of:

1. distributing a plurality of CRIMs around the target area by deploying them from an aircraft or drone;

2. capturing an image of the CRIMs and the target using a high-altitude imaging device;

3. processing the captured image to identify the locations of the CRIMs and generating a digital map for navigation;

4. programming the drone to utilize only CRIMs that maintain stable relative positions for autonomous navigation to the target.

5. The method of claim 4, wherein the processing unit employs a probabilistic model to assess and confirm CRIM stability based on observed relative positions.

6. The system of claim 1, wherein the chemical anchor comprises a water-absorbing material selected from a group including sodium polyacrylate, calcium chloride, and lithium chloride.

7. The system of claim 1, wherein the CRIMs are manufactured to be selectively reflective in the near-infrared spectrum, allowing detection by imaging devices equipped with corresponding filters.

8. The method of claim 4, further comprising the step of periodically updating the drone's target coordinates based on real-time CRIM positioning data from low-bandwidth communication channels.

9. The system of claim 1, wherein the CRIMs are printed with inks that fluoresce under ultraviolet light, facilitating target identification in low-light or nighttime environments.

10. A drone according to claim 1, wherein the drone comprises:

• a GPS-independent navigation unit,
• an imaging device capable of capturing CRIMs,
• a processing unit that evaluates CRIM data and determines CRIM reliability based on their relative positions.

11. The system of claim 1, wherein the processing unit disregards CRIMs that have been defaced, displaced, or exhibit irregularities in relative positioning.

12. The method of claim 4, wherein the CRIMs are designed with a Hamming distance of at least five, reducing the likelihood of false-positive identification.

13. The system of claim 1, wherein the CRIMs include a camouflage layer that reflects specific wavelengths invisible to the human eye, but identifiable by imaging devices equipped with compatible filters.

14. The method of claim 4, further comprising using metameric printing techniques for CRIMs, making them inconspicuous in visible light but detectable in specific spectral ranges such as near-infrared.

15. The system of claim 1, wherein each CRIM includes dual-sided coding, allowing identification regardless of landing orientation.

**FIGURE 1**

FIGURE 2

301

**FIGURE 3**

401

405

410

415

**FIGURE 4**

**FIGURE 5**

**FIGURE 6**

**FIGURE 7**

**FIGURE 8**

702

**FIGURE 9**

(a) ARToolkit (b) ARTag (c) AprilTag

(d) RUNE-Tag (e) reacTIVision

**FIGURE 10**

FIGURE 11

**FIGURE 12**

Posterior Probability vs. Number of Matching Objects

FIGURE 13

Targeting error vs. Number of Matching Objects

FIGURE 14

## EUROPEAN SEARCH REPORT

**Application Number**

EP 25 21 8171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/069214 A1 (DAVIDSON MORGAN E [US] ET AL) 29 February 2024 (2024-02-29) | 10 | INV. G05D1/244 |
| A | * paragraphs [0026] - [0182]; figures 1-29 * | 1-9, 11-15 | F42B12/40 F41G7/00 F41G7/22 |
| | ----- | | |
| A | US 4 281 809 A (OGLESBY FRANK P ET AL) 4 August 1981 (1981-08-04) * column 1, line 58 - column 4, line 8; figures 1, 2 * | 1-15 | |
| | ----- | | |

**TECHNICAL FIELDS SEARCHED (IPC)**

G05D
B64U
F42B
F41G

The present search report has been drawn up for all claims

| Place of search | Date of completion of the search | Examiner |
|---|---|---|
| The Hague | 18 March 2026 | Kasten, Klaus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 8171

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2026

| Patent document cited in search report | Publication date | Patent family member(s) | Publication date |
|---|---|---|---|
| US 2024069214 A1 | 29-02-2024 | NONE | |
| US 4281809 A | 04-08-1981 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2416317 A

- AU 2025900505

**Non-patent literature cited in the description**

- Robot and Drone Localization in GPS-Denied Areas. **J. SIVA** ; **C. POELLABAUER**. Mission-Oriented Sensor Networks and Systems: Art and Science.. Springer, 2019, vol. 164
- Ukraine developing 'unstoppable' AI-powered attack drone. *The Telegraph*, April 2024, https : / / www . telegraph . co . uk / world - news / 2024 / 04 / 08 / ukraine - developing-unstoppable-ai-powered-at-tack-drone
- **C. CHENG et al.** A Unmanned Aerial Vehicle (UAV)/Unmanned Ground Vehicle (UGV) Dynamic Autonomous Docking Scheme in GPS-Denied Environments. *Drones*, 2023, vol. 7 (10), 613
- **MIGUEL OLIVEIRA et al.** A ROS framework for the extrinsic calibration of intelligent vehicles: A multi-sensor, multi-modal approach. *Robotics and Autonomous Systems*, 2020, vol. 131, 103558

- AprilTag: Visual Fiducial System. *AprilRobotics*, 2025
- **S. GARRIDO-JURADO et al.** Automatic generation and detection of highly reliable fiducial markers under occlusion. *Pattern Recognition*, 2014, vol. 47 (6), 2280-2292
- RUNEtag: A high-capacity fiducial marker with strong occlusion resilience. *Proceedings of the IEEE Conference on Computer Vision and Pattern Recognition (CVPR)*, 2011, https://ieeexplore.ieee.org/document/5995544
- **MICHAEL KAESS et al.** *AprilTags resources*, 2025, https://people.csail.mit. edu/kaess/apriltags
- **JUJIANG LIU** ; **CHUNXIANG YAN**. An integrated UWB-Vision framework for autonomous approach and landing of UAVs in GPS-Denied environments. *Mathematical Foundations of Computing*, 2024